**Europäisches Patentamt**

**(19)** **European Patent Office**

**Office européen des brevets**

(11) Publication number : **0 243 203 B1**

# EUROPEAN PATENT SPECIFICATION

(45) Date of publication of patent specification :
**01.04.92 Bulletin 92/14**

(51) Int. Cl.⁵ : **G01F 15/12, G01F 1/42**

(21) Application number : **87303650.3**

(22) Date of filing : **24.04.87**

(54) Venturi flow nozzle with ultrasonic cleaning device.

(30) Priority : **24.04.86 US 855265**

(43) Date of publication of application :
**28.10.87 Bulletin 87/44**

(45) Publication of the grant of the patent :
**01.04.92 Bulletin 92/14**

(84) Designated Contracting States :
**BE CH ES FR GB LI SE**

(56) References cited :
**DE-A- 3 046 061**
**US-A- 3 198 489**
**US-A- 4 320 528**

(73) Proprietor : **WESTINGHOUSE ELECTRIC CORPORATION**
**Westinghouse Building Gateway Center**
**Pittsburgh Pennsylvania 15222 (US)**

(72) Inventor : **Loose, Robert Andrew**
**3902 Glenco Court**
**Murrysville, PA 15668 (US)**
Inventor : **Rice, William Robert**
**517 Cottage Lane**
**Monroeville, PA 15146 (US)**

(74) Representative : **van Berlyn, Ronald Gilbert**
**23, Centre Heights**
**London, NW3 6JG (GB)**

## Description

This invention relates to a venturi flow nozzle mounted in a pipe in a fluid system in such a manner that the nozzle may be cleaned on line without requiring the system to be shut down.

In operation of many industrial plants employing fluid systems having venturi flow nozzles therein, fouling of the venturi flow nozzles, particularly at or near the throat, occurs causing the flow indication to be higher than the actual or calibrated flow value. In these circumstances, the flow rate is less than actually indicated, and consequently, the output for the plant is reduced. This is particularly true in connection with pressurized water nuclear powered electric generating plants which employ venturi flow nozzles in the main feedwater pipe to measure the flow rate of the feedwater to the steam generator. In such plants, following the secondary side calorimetric and adjustment of the Nuclear Instrumentation System, indicated power is higher than the actual reactor power, and the plant thus operates below its licensed thermal limit. Because of this, the electrical output on such plants can fall short of its rated limit by as much as four percent, which in some plants can amount to 40 megawatts.

While various means have been tried for correcting the problem of fouling of venturi flow nozzles, none have proved totally satisfactory. For example, one solution has been to install a handhole upstream of the venturi flow nozzle and manually insert a jet spray nozzle through the handhole to hose off and remove deposits for fouling on the inner surface of the venturi. This particular solution requires a plant shutdown and pipe drainage which is expensive and time consuming. Another solution has been to install leading edge flow meters which are not subject to fouling. Installation of such leading edge flow meters, however, can be expensive.

At the present time, numerous utilities with nuclear power plants, in particular, are trying to find solutions to the problem of losing megawatts due to feedwater venturi flow nozzle fouling. In view of the fact that a good solution to the fouling problem presently does not exist, such utilities are reluctant to implement any solutions, and consequently, they continue to lose megawatt output which is very costly.

Accordingly, it is the principal object of the present invention to provide a device capable of easily cleaning venturi flow nozzles which is relatively inexpensive and easy to install and which does not require plant shutdown and pipe drainage.

With this object in view the present invention resides in a venturi flow nozzle (14) mounted in a pipe (12) in a fluid system especially a nuclear reactor system for measuring fluid flow through said pipe (12), characterized by a transducer (25) mounted adjacent said pipe (12) for producing sound waves, a rod (27) connected at one end to said transducer (25) and extending through an opening (30) into said pipe (12) so that the other end of said rod (27) contacts said nozzle (14) to transmit said sound waves thereto, and a guiding and sealing assembly (32) for said rod (27) attached to said pipe (12) around said pipe opening (30).

There may be provided a plurality of transducer assemblies mounted around a pipe for producing and transmitting sound waves to the throat of the venturi flow nozzle therein. The transducer assemblies may be mounted on a plate mounted around the pipe.

The device preferably includes a guiding and sealing assembly for each rod which is attached to the pipe around each opening. Each guiding and sealing assembly includes a base member and a cover member, each having a central opening therein through which the rod passes, and sealing means surrounding the rod. In one of the embodiments the sealing means includes packing rings around the rod, while in another embodiment the sealing means includes a bellows surrounding the rod. The guiding and sealing assembly further may include spring means for biasing the rod towards the nozzle.

The invention will become more readily apparent, from the following description of a preferred embodiment thereof shown, in the accompanying drawings, wherein:

Fig. 1 is a front elevational view, partially in cross-section, showing the ultrasonic cleaning device of the present invention as including four transducer assemblies.

Fig. 2 is a side elevational view of the ultrasonic cleaning device of the present invention shown in Fig. 1.

Fig. 3 is a perspective view of one of the transducer assemblies of the present invention mounted in a cover shown in dotted lines.

Fig. 4 is a cross-sectional view taken along line 4-4 of Fig. 1.

Fig. 5 is a schematic drawing showing the ultrasonic cleaning device installed in the main feedwater pipe leading to a steam generator of a pressurized water nuclear powered electric generating system.

Fig. 6 is a cross-sectional view taken along line 6-6 of Fig. 1 showing one embodiment of the guiding and sealing assembly for the rod of the ultrasonic cleaning device of the present invention.

Fig. 7 is a view similar to Fig. 6 showing an alternative embodiment of the guiding and sealing assembly.

Fig. 8 is a view similar to Fig. 6 showing still another embodiment of the guiding and sealing assembly.

Fig. 9 is a view similar to Fig. 6 showing a further embodiment of the guiding and sealing assembly.

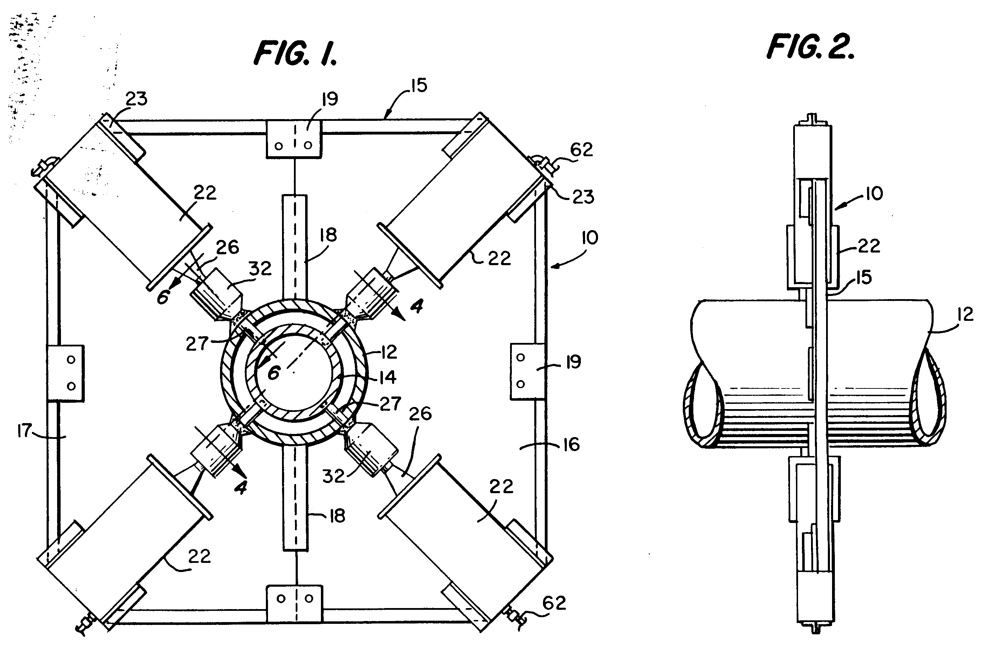

As shown in Figs. 1 and 2 an ultrasonic cleaning device, generally indicated by the numeral 10, is mounted around a pipe 12 of a fluid system for cleaning a venturi flow nozzle 14 mounted within the pipe. The cleaning device includes a plate 15 which is split into two sections 16 and 17 for ease of installation around the pipe 12. The plate sections 16 and 17 are fastened together and secured to the pipe by suitable bracket or clamp means 18. Mounted on the edges of the plate 10 are a plurality of brackets 19 adapted to be attached to suitable support structure (not shown) to further hold the cleaning device in position.

A plurality of transducer assemblies 22 are mounted on plate 10 by a suitable means such as brackets 23 which may be bolted to the plate. The transducer assemblies generate and transmit sound waves. In the embodiment shown in Fig. 1, four such transducer assemblies 22 are shown spaced 90° from each other around the circumference of pipe 12. A suitable transducer assembly is manufactured by Swen Sonic Corporation and is designated as a Sonic Horn Assembly, 10 kHz, No. 101032.

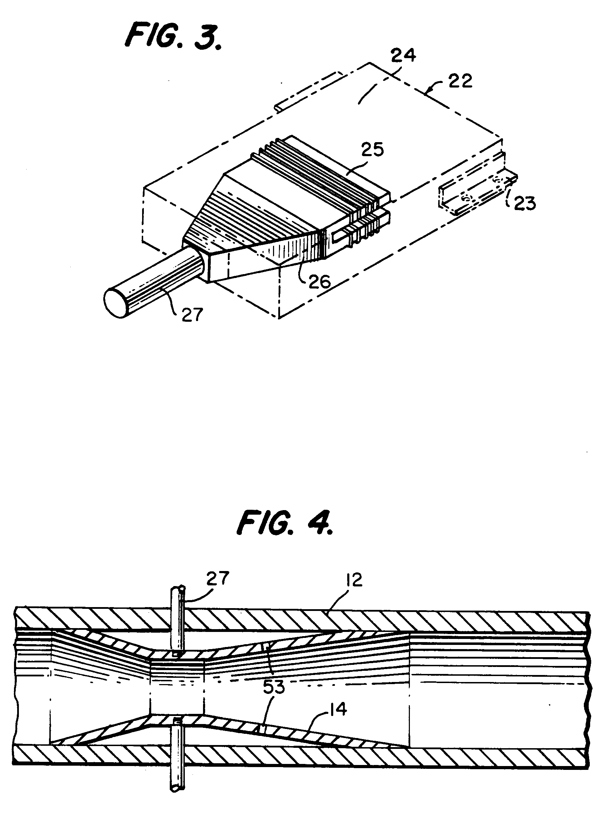

As best shown in Fig. 3, each transducer assembly 22 includes a cover 24 having mounting brackets 23 thereon. The cover 24 encloses a transducer 25 for generating sound waves and preferably is comprised of a series of U-shaped nickel laminations assembled into a single unit with electrical coils surrounding each leg of the U-shaped configuration. The cover functions to deaden the sound waves. Attached to the bottom of the U-shaped configuration by suitable means such as silver brazing, is a horn 26 preferably constructed of solid stainless steel. The horn functions to concentrate the sound waves generated by the transducer and transmit them to an extension rod 27 formed of a suitable material such as stainless steel. In the embodiment shown in Fig. 3, the horn is shown with straight sides tapering inwardly from the transducer to the rod 27. The horn, however, may have other configurations such as stepped sides-narrowing to the rod or be formed in the general shape of a parabolic curve. The rod 27 preferably is threadably attached to the horn 26 by means of a threaded extension or portion 28 formed at one end of the rod.

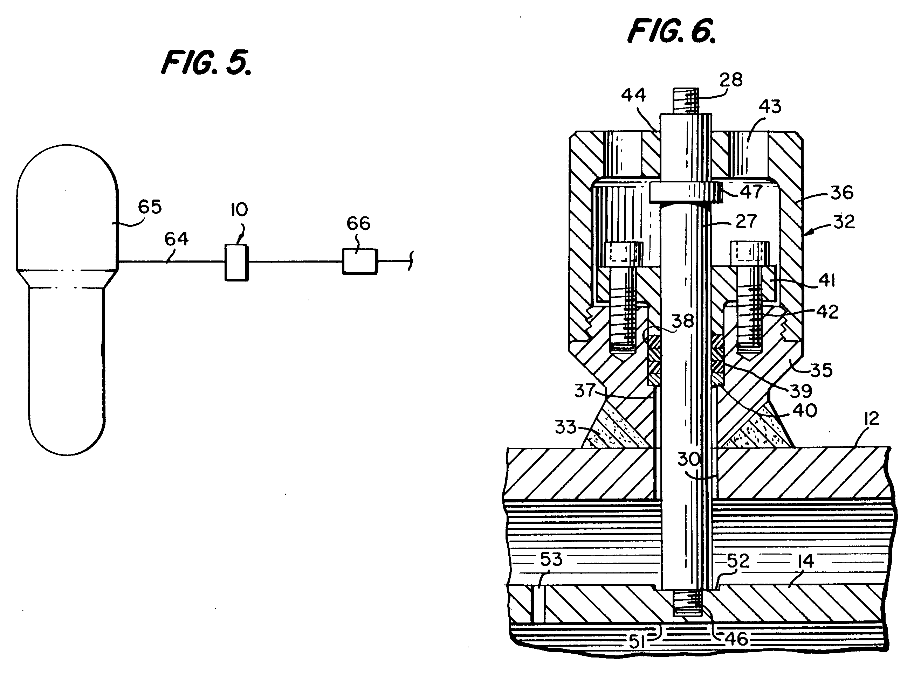

As most clearly shown in Figs. 6-9, the pipe 12 is provided with an opening or hole 30 to accommodate the rod 27 of each transducer assembly employed. A guiding and sealing assembly, generally indicated by the numeral 32, is provided for each rod and is rigidly secured by suitable means such as welds 33 to the pipe 12 around each pipe opening 30. Rather than being supported by plate 15, each transducer assembly 22 may be supported solely by a guiding and sealing assembly 32.

In the embodiment shown in Fig. 6, the guiding and sealing assembly includes a lower circular base member or housing 35 having an upper circular cover member 36 threadably attached thereto. Base member 35 is provided with a central opening 37 therethrough to accommodate rod 27. Opening 37 contains an enlarged portion 38 at its upper end to accommodate one or more packing rings 39 which provide a seal around rod 27. A lower retainer ring 40 is provided in enlarged portion 38 underneath the packing rings while an upper retainer ring 41 is provided above the packing rings 39 in the enlarged portion 38 of central opening 37. Upper retainer ring 41 may be secured to base member 35 by suitable means such as bolts 42. Openings or holes 43 are formed in the top of the cover member 36 to provide an outlet for removing any fluid which may leak past the packing material into the space between cover member 36 and retainer ring 41. Cover member 36 further is provided with a central opening 44 to receive the upper end of rod 27.

In the embodiment shown in Fig. 6, the rod 27 is provided at its lower end with a threaded portion or extension 46 which is threadably connected to the venturi flow nozzle 14 at the throat 51 of the nozzle. Rod 27 has a circular lip or ring 47 spaced from the end which is to be connected to the horn 26 whereby the lip 47 provides a safety feature stop for rod 27 by abutting against the upper inner surface of cover member 36. Thus, in case rod 27 should become disconnected at its lower end from nozzle 14, lip 47 would function as a safety stop to prevent the rod from being blown out. The nozzle 14 may be provided with a flattened portion 52 at the point where the bottom end of rod 27 contacts the nozzle. As further shown in Figs. 4 and 6, the walls of nozzle 14 are provided with a plurality of openings 53 to permit fluid passing through the nozzle to enter the space between the inner wall of pipe 12 and the outer wall of nozzle 14 to equalize the fluid pressure inside and outside of the nozzle.

To install the rod 27, it is inserted through the central opening 37 in base member 35 and threaded portion 46 is threaded into nozzle 14. Cover member 36 is then attached to base member 34 with threaded portion 28 extending therethrough and the horn 26 is then threaded onto threaded portion 28 of rod 27.

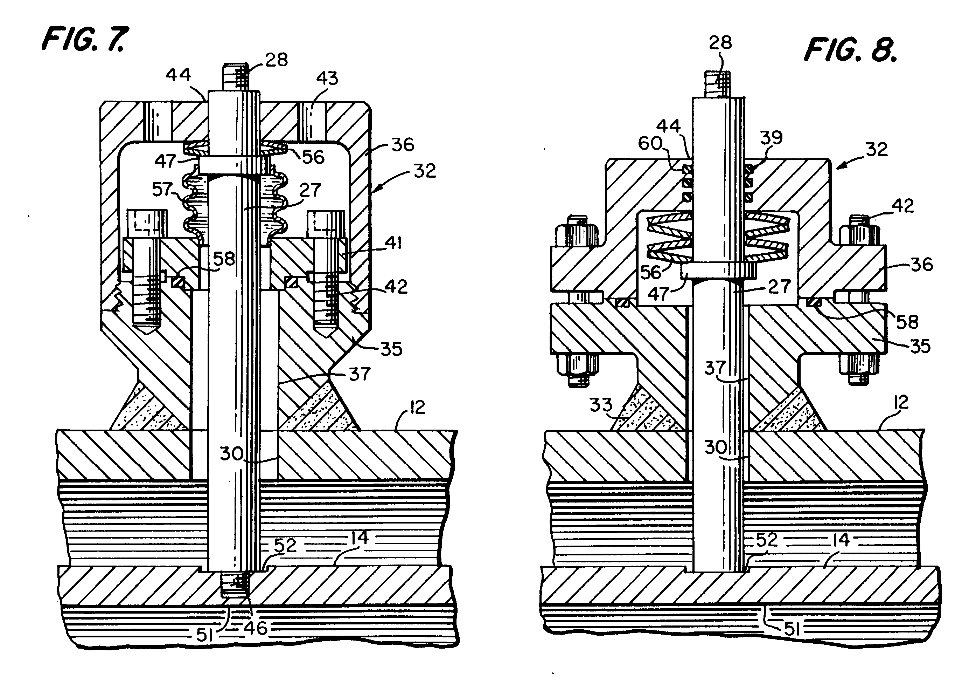

Additional embodiments of the guiding and sealing assembly 32 are shown in Figs. 7-9. Since many of the parts in these additional embodiments are the same as the parts described in connection with the embodiment of Fig. 6, similar parts in the other embodiments will be designated by the same numerals used in connection with the embodiment shown in Fig. 6.

In the embodiment shown in Fig. 7, the rod 27 is threaded into nozzle 14 at its bottom end and a bellville spring 56 is mounted around the upper portion of the rod positioned between lip 47 and the upper inner surface of cover member 36. Accordingly, spring 56 biases the rod downwardly towards the nozzle 14. In addition, a bellows 57 surrounds rod 27 at its upper end. Bellows 57 is attached at its upper end to lip 47 and at its lower end to the opening in retainer ring 41.

A metal O-ring 58 is provided between retainer ring 41 and base member 35. The bellows 57 and the O-ring 58 serve as seals to prevent any fluid from pipe 12 entering into the compartment inside cover member 36. The remaining parts of the embodiment of Fig. 7 function in the same manner as that set forth in connection with the embodiment of Fig. 6.

In the embodiment shown in Fig. 8, the packing rings 39 are located in grooves 60 formed around the periphery of the central opening in cover member 36 to provide a seal against fluid from pipe 12 leaking to the outside. Moreover, in the embodiment of Fig. 8 a pair of bellville springs 56 are employed to bias the rod 27 towards the nozzle 14. In addition, the bottom of the rod 27 forcibly contacts the flattened portion 52 of nozzle 14 rather than being threadably connected thereto. Lip 47 functions as a safety stop in the same manner as that described in connection with the embodiment of Fig. 6. Metal O-ring 58 in this embodiment is positioned directly between base member 35 and cover member 36. Moreover, in this embodiment the bolts 42 directly connect cover member 36 with base member 35.

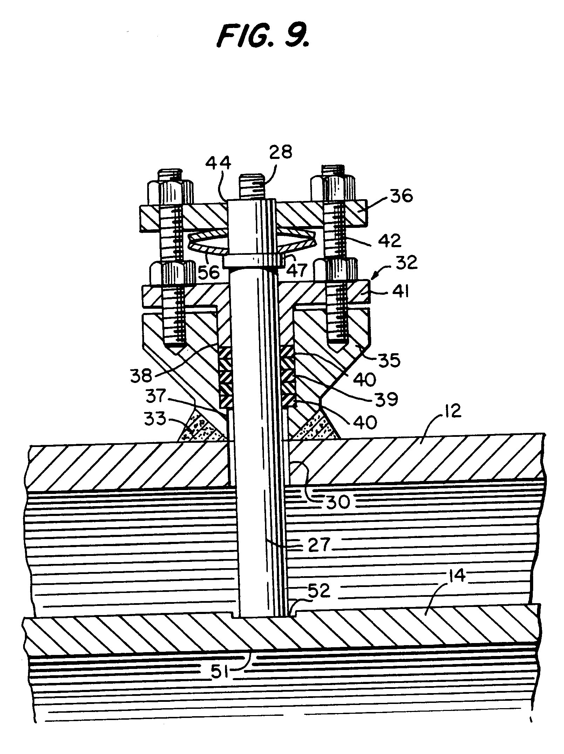

In the embodiment shown in Fig. 9, cover member 36 is in the form of a flat plate secured around rod 27 by bolts 42 which thread therethrough as well being threaded through retainer ring 41 into base member 35 to secure the assembly together. In this embodiment, retainer rings 40 are positioned both above and below the packing rings 39. Like the embodiment of Fig. 8, the embodiment of Fig. 9 also has rod 27 forcibly contacting flattened portion 52 of nozzle 14 rather than being threadably connected thereto. Rod 27 is biased downwardly towards nozzle 14 by bellville spring 56 mounted around the rod between lip 47 and cover member 36. Lip 47 functions as a safety stop in the same manner as that described in connection with the embodiment of Fig. 6.

In operation of the cleaning device of the present invention, the cleaning device may be mounted to pipe 12 and venturi nozzle 14 as shown in Fig. 1 or each transducer assembly 22 may be supported solely by each guiding and sealing assembly 32. Power is supplied to the transducers by any suitable source through electrical connections 62. During use, an automatic timer may be employed to actuate the transducers of the cleaning device as desired.

The use of sound waves to prevent fouling in a venturi flow nozzle by preventing deposits from building up is extremely effective. The sound waves create ultrasonic cavitation which scrubs the surface of the inside of the nozzle by means of countless, minute, cavity implosions created in the fluid flowing therethrough. These cavities are not air bubbles which rise to the surface, but rather are tiny voids created and collapsed with the passage of each sound pressure wave. The energy released as each tiny cavity collapses against the surface, results in a powerful, thorough cleaning action which leaves the surface itself completely intact and clean.

The ultrasonic cavitation is produced by generating mechanical vibrations in the transducer elements which then transmit the vibrations as sound waves to the horn which in turn concentrates the sound waves to the rod for effective transmission directly to the venturi flow nozzle.

The present invention is useful in many different industries such as the nuclear power industry and the chemical industry. For example, as shown in Fig. 5, the cleaning device 10 may be installed in connection with a flow venturi nozzle located in the main feedwater pipe 64 of a pressurized water nuclear powered electrical generating plant between the steam generator 65 and the main feedwater control valve 66.

It is apparent from the foregoing that many advantageous features are provided by the present invention. Cleaning of the venturi flow nozzles can be done on line and does not require plant shutdown and pipe drainage. The cleaning can be done automatically and does not require manual operation such as that required with jet spraying. The components of the cleaning device are extremely durable and require little if any replacement or spare parts and are essentially maintenance free. In addition, the device is relatively inexpensive when compared to other alternatives, as well as being easy to install.

## Claims

1. A venturi flow nozzle (14) mounted in a pipe (12) in a fluid system especially a nuclear reactor system for measuring fluid flow through said pipe (12), characterized by a transducer (25) mounted adjacent said pipe (12) for producing sound waves, a rod (27) connected at one end to said transducer (25) and extending through an opening (30) into said pipe (12) so that the other end of said rod (27) contacts said nozzle (14) to transmit said sound waves thereto, and a guiding and sealing assembly (32) for said rod (27) attached to said pipe (12) around said pipe opening (30).

2. A nozzle according to claim 1, characterized in that a horn (26) is disposed between said transducer (25) and said one end (28) of said rod (27) to concentrate said sound waves to said rod (27).

3. A nozzle according to claim 1, characterized in that a cover (24) is disposed around said transducer (25).

4. A nozzle according to claim 1, characterized in that a plurality of said transducers (25) and rods (27) are mounted around said pipe (12) for producing and transmitting said sound waves to said nozzle (14).

5. A nozzle according to claim 1, characterized in that said rod (27) includes a threaded portion (46) at said other end by which it is connected to said nozzle (14).

6. A nozzle according to claim 1, characterized in that a plate (15) is mounted around said pipe (12) for supporting said transducer (25).

7. A nozzle according to claim 1, characterized in that said guiding an sealing assembly (32) comprises a base member (35) and a cover member (36), each having a central opening (37, 44) therein through which said rod (27) passes, and sealing means (39, 57, 58) surrounding said rod (27).

8. A nozzle according to claim 7, characterized in that said guiding and sealing assembly (32) further includes spring means (56) for biasing said rod (27) towards said nozzle (14).

9. A nozzle according to claim 7, characterized in that said sealing means (39, 57, 58) includes at least one packing ring (39) around said rod (27) in at least one of said central openings (37, 44).

10. A nozzle according to claim 7, characterized in that said sealing means (39, 57, 58) includes a bellows (57) surrounding said rod (27).


## Patentansprüche

1. Venturidüse (14), angeordnet in einem Rohr (12) in einem Fluidsystem, insbesondere einem Kernreaktorsystem, zum Messen von Fluidströmung durch das Rohr (12), gekennzeichnet durch einen Wandler (25), der nahe dem Rohr (12) zum Erzeugen von Schallwellen angeordnet ist, einen Stab (27), der an einem Ende mit dem Wandler (25) verbunden ist und sich durch eine Öffnung (30) in das Rohr (12) erstreckt, so daß das andere Ende des Stabes (27) mit der Düse (14) zum Übertragen der Schallwellen in Kontakt tritt, und eine Führungs- und Dichtungsanordnung (32) für den Stab (27), die am Rohr (12) um die Rohröffnung (30) befestigt ist.

2. Venturidüse nach Anspruch 1, dadurch gekennzeichnet, daß ein Horn (26) zwischen dem Wandler (25) und dem einen Ende (28) des Stabes (27) zum Konzentrieren der Schallwellen auf die Stange (27) angeordnet ist.

3. Venturidüse nach Anspruch 1, dadurch gekennzeichnet, daß eine Abdeckung (24) um den Wandler (25) angeordnet ist.

4. Venturidüse nach Anspruch 1, dadurch gekennzeichnet, daß eine vielzahl von Wandlern (25) und Stäben (27) um das Rohr (12) zum Erzeugen und Übertragen der Schallwellen zur venturidüse (14) befestigt ist.

5. Venturidüse nach Anspruch 1, dadurch gekennzeichnet, daß der Stab (27) einen Gewindeabschnitt (46) am anderen Ende aufweist, durch den er mit der Düse (14) verbunden ist.

6. Venturidüse nach Anspruch 1, dadurch gekennzeichnet, daß eine Platte (15) um das Rohr (12) zum Tragen des Wandlers (25) befestigt ist.

7. Venturidüse nach Anspruch 1, dadurch gekennzeichnet, daß die Führungs- und Dichtungsanordnung (32) ein Basiselement (35) und ein Abdeckelement (36), wobei jedes eine zentrale Öffnung (37, 44) aufweist, durch die der Stab (27) hindurchführt, und den Stab (27) umgebende Dichtungsmittel (39, 57, 58) enthält.

8. Venturidüse nach Anspruch 7, dadurch gekennzeichnet, daß die Führungs- und Dichtungsanordnung (32) weiterhin eine Feder (56) zum Vorspannen des Stabes (27) gegen die Düse (14) aufweist.

9. Venturidüse nach Anspruch 7, dadurch gekennzeichnet, daß das Dichtungsmittel (39, 57, 58) wenigstens einen Dichtungsring (39) um den Stab (27) in zumindest einer der zentralen Öffnungen (37, 44) enthält.

10. Venturidüse nach Anspruch 7, dadurch gekennzeichnet, daß das Dichtungsmittel (39, 57, 58) einen den Stab (27) umgebenden Balg (57) enthält.


## Revendications

1. Buse d'écoulement (14) du type venturi montée dans un tuyau (12) dans un système de fluide, en particulier un système de réacteur nucléaire, pour mesurer le débit de fluide à travers ledit tuyau (12), caractérisée par un transducteur (25) monté au voisinage dudit tuyau (12) pour produire des ondes sonores, une tige (27) connectée à une première extrémité audit transducteur (25) et s'étendant à travers une ouverture (30) dans ledit tuyau (12) de telle sorte que l'autre extrémité de ladite tige (27) vienne en contact avec ladite buse (14) afin de transmettre lesdites ondes sonores à celle-ci, et par un ensemble de guidage et d'étanchéité (32) pour ladite tige (27), fixé audit tuyau (12) autour de ladite ouverture de tuyau (30).

2. Buse selon la revendication 1, caractérisée en ce qu'une trompe (26) est disposée entre ledit transducteur (25) et ladite première extrémité (28) de ladite tige (27) afin de concentrer lesdites ondes sonores sur ladite tige (27).

3. Buse selon la revendication 1, caractérisée en ce qu'un capot (24) est dispose autour desdits transducteurs (25).

4. Buse selon la revendication 1, caractérisée en ce qu'une pluralité desdits transducteurs (25) et desdites tiges (27) sont montées autour dudit tuyau (12) pour produire et transmettre lesdites ondes sonores à ladite buse (14).

5. Buse selon la revendication 1, caractérisée en ce que ladite tige (27) comporte une partie filetée (46) à ladite autre extrémité, grâce à laquelle elle est connectée à ladite buse (14).

6. Buse selon la revendication 1, caractérisée en ce qu'une plaque (15) est montée autour dudit-tuyau (12) pour supporter ledit transducteur (25).

7. Buse selon la revendication 1, caractérisée en ce que ledit ensemble de guidage et de scellement (32) comporte un élément de base (35) et un élément de capot (36), chacun ayant une ouverture centrale (37, 44) à l'intérieur de celui-ci, à travers laquelle passe ladite tige (27) et des moyens d'étanchéite (39, 57, 58) entourant ladite tige (27).

8. Buse selon la revendication 7, caractérisée en ce que ledit ensemble de guidage et de scellement (32) comporte de plus des moyens formant ressort (56) pour charger ladite tige (27) en direction de ladite buse (14).

9. Buse selon la revendication 7, caractérisée en ce que lesdits moyens d'étanchéité (39, 57, 58) comportent au moins un anneau de bourrage (39) autour de ladite tige (27) dans au moins l'une desdites ouvertures centrales (37, 44).

10. Buse selon la revendication 7, caractérisée en ce que lesdits moyens d'étanchéité (39, 57, 58) comportent un soufflet (57) entourant ladite tige (27).

FIG.2.

FIG.1.

## FIG. 3.

## FIG. 4.

*FIG. 6.*

*FIG. 5.*

FIG. 8.

FIG. 7.

## FIG. 9.